# EUROPEAN PATENT SPECIFICATION

(11) **EP 2 873 505 B1**
(45) Date of publication and mention of the grant of the patent: **20.07.2016**
(21) Application number: 14192627.9
(22) Date of filing: 11.11.2014
(51) Int. Cl.: B29C 45/50, B29C 45/20, B29C 45/17, B29C 45/53

(54) **Injection molding machine**
Spritzgießmaschine
Machine de moulage à injection

(30) Priority: 14.11.2013 JP 2013236270
(43) Date of publication of application: 20.05.2015
(73) Proprietor: SUMITOMO HEAVY INDUSTRIES, LTD., Tokyo 141-6025 (JP)
(72) Inventor: Amano, Mitsuaki, Chiba-shi, Chiba 263-0001 (JP); Konno, Masaaki, Chiba-shi, Chiba 263-0001 (JP); Hayakawa, Masahiro, Chiba-shi, Chiba 263-0001 (JP)
(74) Representative: Louis Pöhlau Lohrentz

(56) References cited:
- US-A- 4 299 791
- US-A1- 2008 305 200
- US-A1- 2011 101 567

## Description

### Field of the Invention

The present invention relates to an injection molding machine.

### Description of Related Art

An injection molding machine has a cylinder heating a molding material and a nozzle disposed at a front end of the cylinder. The liquid molding material in the cylinder is injected from the nozzle, passes through a sprue, a runner, and a gate of a mold unit in this order, and is filled in a cavity space. The molding material filled in the cavity space is solidified, and is taken out as a molding product after mold opening.

The sprue heated by a heater or the like is referred to as a hot sprue, and the runner heated by a heater or the like is referred to as a hot runner. The solidification of the molding material in the sprue and the runner can be prevented, and the amount of use of the molding material can be reduced so that only the molding product in the cavity space is taken out (for example, refer to Japanese Unexamined Patent Application Publication No. 2007-210163).

The hot runner is reduced in pressure before mold opening so as to prevent the molding material from leaking from a tip end (end on the gate side) of the hot runner. The hot sprue is also reduced in pressure when the hot runner is reduced in pressure.

In the related art, much time has been taken for hot runner pressure reduction, for example see US 4 299 791 A.

### SUMMARY OF THE INVENTION

The present invention has been made in view of the above problem and an object thereof is to provide an injection molding machine capable of shortening the length of time required for hot runner pressure reduction.

In order to address the above problem, an aspect of the present invention provides an injectionmoldingmachine including a cylinder that heats a molding material, a nozzle that is disposed at a front end of the cylinder, an injection member that injects the molding material in the cylinder from the nozzle to a mold unit, a driving unit that operates the injection member in the cylinder, a moving unit that allows the nozzle to advance and retract to the mold unit, and a controller that controls the driving unit and the moving unit, in which the controller performs at least a part of a first pressure reduction process in which a hot runner is reduced in pressure by the retraction of the nozzle to the mold unit and at least a part of a second pressure reduction process in which the hot runner is reduced in pressure by the operation of the injection member at the same time after gate seal of the mold unit.

According to an aspect of the present invention, an injection molding machine capable of shortening the length of time required for hot runner pressure reduction can be provided.

### BRIEF DESCRIPTION OF THE DRAWINGS

Fig. 1 is a view illustrating a state of gate seal of an injection molding machine according to an embodiment of the present invention.
Fig. 2 is a view illustrating a state of hot runner pressure reduction of the injection molding machine according to the embodiment of the present invention.

### DETAILED DESCRIPTION OF THE INVENTION

Hereinafter, an embodiment of the present invention will be described with reference to accompanying drawings. In the drawings, identical or corresponding reference numerals will be attached to identical or corresponding configurations to omit description. In the description, a direction of movement of a screw in a filling process (leftward in the drawings) is forward, and a direction of movement of the screw in a plasticizing process (rightward in the drawings) is backward.

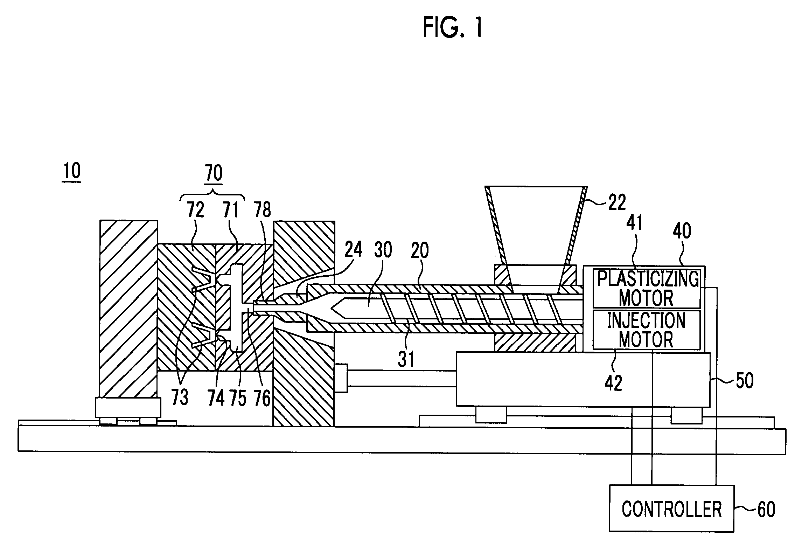

Fig. 1 is a view illustrating a state of gate seal of an injection molding machine according to the embodiment of the present invention. In Fig. 1, a molding material is not illustrated. The gate seal refers to an inlet of a cavity space being closed by the molding material that is solidified in the cavity space.

An injection molding machine 10 has a cylinder 20, a nozzle 24, a screw 30, a screw driving unit 40, a nozzle moving unit 50, and a controller 60. The injection molding machine 10 fills a cavity space 73 of a mold unit 70 with a liquid molding material and molds a molding product.

The mold unit 70 has, for example, a stationary mold 71 and a movable mold 72. The cavity space 73 is formed between the stationary mold 71 and the movable mold 72 in a clamping state. The cavity space 73 is connected to a hot sprue 76 via a gate 74 and a hot runner 75.

The mold unit 70 is an open gate-type mold unit in which a tip end of the hot runner 75 (end on the gate 74 side) is open. However, the mold unit 70 may also be a valve gate-type mold unit in which the gate 74 is opened and closed by a valve. Closing of the valve gate may be performed after pressure reduction of the hot runner 75 (described later). A force that is required for closing of the valve gate can be reduced.

The cylinder 20 heats the molding material. A heating source such as a heater is disposed on an outer circumference of the cylinder 20. A hopper 22 as a material supply unit is connected to a back portion of the cylinder 20. The molding material that is dropped from the hopper 22 is supplied into the cylinder 20.

A feed screw that is capable of adjusting a molding material supply rate may be used as the material supply unit instead of the hopper 22.

The nozzle 24 is disposed at a front end of the cylinder 20. The nozzle 24 is inserted into a nozzle hole 78 that is formed in a rear end face of the stationary mold 71. An inner diameter of the nozzle hole 78 is slightly larger than an outer diameter of the nozzle 24. An inlet of the hot sprue 76 is formed on an inner bottom surface of the nozzle hole 78. The nozzle 24 is pressed against the inner bottom surface of the nozzle hole 78, and injects the molding material toward the hot sprue 76.

The nozzle 24 may be an open nozzle having an open tip end or a shut-off nozzle that is opened and closed by a valve. The valve of the shut-off nozzle is in an open state during pressure reduction of the hot runner 75 (described later). The molding material in the mold unit 70 can reflux into the cylinder 20 via the shut-off nozzle. The reflux means a flow that is opposite in direction to a flow in the filling process.

The screw 30 is an injection member that injects the molding material in the cylinder 20 from the nozzle 24 to the mold unit 70. The screw 30 is arranged to be rotatable and capable of advancing and retracting in the cylinder 20. A depth of a spiral groove 31 that is formed in the screw 30 may be constant or differ from place to place.

The screw driving unit 40 is a driving unit that operates the screw 30 in the cylinder 20. The screw driving unit 40 may have a common configuration. For example, the screw driving unit 40 has a plasticizing motor 41 that rotates the screw 30 and an injection motor 42 that allows the screw 30 to advance and retract.

In the plasticizing process, the plasticizing motor 41 is driven to rotate the screw 30. The molding material that is supplied into the cylinder 20 is sent forward along the groove 31 of the screw 30 and is gradually melted. The screw 30 retracts as the liquid molding material is sent forward from the screw 30 and is accumulated in a front portion of the cylinder 20. When a predetermined amount of the molding material is accumulated forward from the screw 30, the plasticizing process is completed.

In the filling process, the injection motor 42 is driven so that the screw 30 advances. The molding material that is accumulated forward from the screw 30 is injected from the nozzle 24 to be filled in the mold unit 70. The liquid molding material in the cylinder 20 passes through the hot sprue 76, the hot runner 75, and the gate 74 in this order and is filled in the cavity space 73. The molding material that is filled in the cavity space 73 is solidified and is taken out as the molding product after mold opening.

The nozzle moving unit 50 is a moving unit that allows the nozzle 24 to advance and retract to the mold unit 70. The nozzle moving unit 50 presses the nozzle 24 against the mold unit 70 in a clamping state. The nozzle moving unit 50 may have a common configuration.

The controller 60 has a storage unit such as a memory and a CPU. The controller 60 controls the screw driving unit 40 and the nozzle moving unit 50 and performs pressure reduction of the hot runner 75 by executing a control program stored in the storage unit with the CPU.

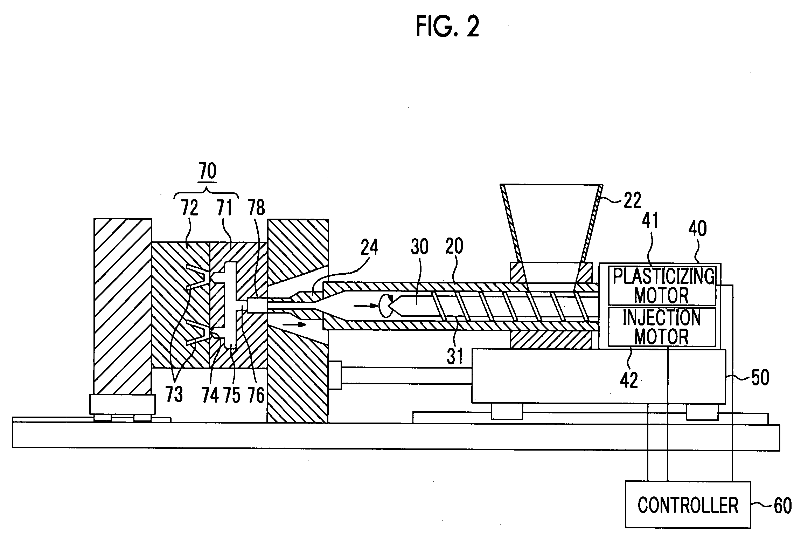

Fig. 2 is a view illustrating a state of hot runner pressure reduction of the injection molding machine according to the embodiment of the present invention. In Fig. 2, the molding material is not illustrated. The hot runner 75 is reduced in pressure before molding opening so as to prevent the molding material from leaking from the tip end of the hot runner 75. The hot sprue 76 is also reduced in pressure when the hot runner 75 is reduced in pressure.

The controller 60 controls a first pressure reduction process in which the hot runner 75 is reduced in pressure by retraction of the nozzle 24 to the mold unit 70 and a second pressure reduction process in which the hot runner 75 is reduced in pressure by the operation of the screw 30. The first pressure reduction process and the second pressure reduction process are performed after gate seal of the mold unit 70.

In the first pressure reduction process, a space is formed between a front end face of the nozzle 24 and the inner bottom surface of the nozzle hole 78 by the retraction of the nozzle 24 to the mold unit 70. The hot runner 75 is reduced in pressure as the molding material in the mold unit 70 refluxes toward the space.

In the first pressure reduction process, the front end face of the nozzle 24 retracts to a position flush with an insertion slot of the nozzle hole 78 so that the molding material does not overflow from the nozzle hole 78. The front end face of the nozzle 24 may also retract to a position forward from the insertion slot of the nozzle hole 78.

The operation of the screw 30 in the second pressure reduction process may include both the retraction of the screw 30 and the rotation of the screw 30. A space in the cylinder 20 is widened by the retraction of the screw 30, and the molding material in the mold unit 70 refluxes toward the space. The retraction of the screw 30 is performed by driving the injection motor 42. When the screw 30 is rotated in the direction opposite to a direction of rotation in the plasticizing process, the molding material refluxes along the groove 31 of the screw 30. The hot runner 75 is reduced in pressure when the molding material refluxes. The reverse rotation of the screw 30 is performed by driving the plasticizing motor 41.

The controller 60 performs at least a part of the first pressure reduction process and at least a part of the second pressure reduction process at the same time after gate seal of the mold unit 70. Therefore, the length of time that is required for the pressure reduction of the hot runner 75 can be shortened.

Flow out of the nozzle 24 to the space that is formed between the mold unit 70 and the nozzle 24 by the first pressure reduction process can be suppressed by the second pressure reduction process. This is because the molding material refluxes in the nozzle 24 in the second pressure reduction process. Flow out of the mold unit 70 to the space that is formed between the mold unit 70 and the nozzle 24 by the first pressure reduction process can be promoted, and the pressure reduction of the hot runner 75 can be promoted.

The first pressure reduction process and the second pressure reduction process may be performed before the plasticizing process. The first pressure reduction process may be initiated before the second pressure reduction process, the second pressure reduction process may be initiated before the first pressure reduction process, and the first pressure reduction process and the second pressure reduction process may be initiated at the same time. The first pressure reduction process may be completed before the second pressure reduction process, the second pressure reduction process may be completed before the first pressure reduction process, and the first pressure reduction process and the second pressure reduction process may be completed at the same time.

The first pressure reduction process may be performed while the second pressure reduction process is performed so that flow out of the nozzle 24 to the space that is formed between the mold unit 70 and the nozzle 24 by the first pressure reduction process is prevented by the second pressure reduction process.

As illustrated in Fig. 2, at least apart of the first pressure reduction process, at least a part of the process for retracting the screw 30, and at least a part of the process for the reverse rotation of the screw 30 may be performed at the same time. The length of time that is required for the pressure reduction of the hot runner 75 can be further shortened.

The retraction of the screw 30 may be initiated before the reverse rotation of the screw 30, the reverse rotation of the screw 30 may be initiated before the retraction of the screw 30, and the retraction of the screw 30 and the reverse rotation of the screw 30 may be initiated at the same time. The retraction of the screw 30 may be completed before the reverse rotation of the screw 30, the reverse rotation of the screw 30 may be completedbefore the retraction of the screw 30, and the retraction of the screw 30 and the reverse rotation of the screw 30 may be completed at the same time.

The operation of the screw 30 in the second pressure reduction process according to this embodiment includes both the retraction of the screw 30 and the rotation of the screw 30. However, the operation of the screw 30 in the second pressure reduction process according to this embodiment may include at least one of the retraction of the screw 30 and the rotation of the screw 30 and only one of the retraction of the screw 30 and the rotation of the screw 30 may be performed.

The embodiment of the injection molding machine has been described above. However, the present invention is not limited to the embodiment described above, and can be modified and improved in various forms within the concept of the present invention specified in the claims.

For example, the injection molding machine according to the embodiment described above is a horizontal mold that has a horizontal mold opening/closing direction, but may also be a vertical mold that has a vertical mold opening/closing direction.

Also, the injection molding machine according to the embodiment described above is an inline screw-type injection molding machine, but may also be a pre-plasticization-type injection molding machine. In the pre-plasticization-type injection molding machine, a molding material that is melted in a plasticizing cylinder is supplied to an injection cylinder and the molding material is injected into a mold unit from the injection cylinder. A plunger as an injection member is arranged in the injection cylinder. The plunger is arranged to be capable of advancing and retracting in the injection cylinder. An operation of the plunger for hot runner pressure reduction may be retraction of the plunger. A space in the injection cylinder is widened by the retraction of the plunger, and the hot runner is reduced in pressure as the molding material in the mold unit refluxes toward the space.

## Claims

1. An injection molding machine (10) comprising:
a cylinder (20) that heats a molding material;
a nozzle (24) that is disposed at a front end of the cylinder (20) ;
an injection member that injects the molding material in the cylinder (20) from the nozzle (24) to a mold unit (70);
a driving unit (40) that operates the injection member in the cylinder (20);
a moving unit (50) that allows the nozzle (24) to advance and retract to the mold unit; **characterised in that** the injection molding machine comprises:
a controller (60) that controls the driving unit (40) and the moving unit (50),
wherein the controller (60) is connected to the moving unit (50) so as to allow the moving unit (50) to perform a first pressure reduction process in which a hot runner is reduced in pressure by the retraction of the nozzle (24) to the mold unit (70) and is connected to the driving unit (40) so as to allow the driving unit (40) to perform a second pressure reduction process in which the hot runner is reduced in pressure by the operation of the injection member, in such a manner that at least a part of the first pressure reduction process and at least a part of the second pressure reduction process are performed at the same time after gate seal of the mold unit (70).

2. The injection molding machine (10) according to claim 1,
wherein the injection member is a screw that is arranged to be rotatable and capable of advancing and retracting in the cylinder (20), and
wherein the operation of the screw in the second pressure reduction process includes at least one of retraction of the screw and rotation of the screw.

3. The injection molding machine (10) according to claim 1,
wherein the injection member is a plunger that is arranged to be capable of advancing and retracting in the cylinder (20), and
wherein the operation of the plunger in the second pressure reduction process is retraction of the plunger.

4. The injection molding machine (10) according to any one of claims 1 to 3,
wherein the first pressure reduction process is performed while the second pressure reduction process is performed.

## Patentansprüche

1. Eine Spritzgießmaschine (10), umfassend:
einen Zylinder (20), der eine Gießmasse erhitzt,
eine Düse (24), die an einem vorderen Ende des Zylinders (20) angeordnet ist,
ein Einspritzbauteil, welches die Gießmasse in dem Zylinder (20) von der Düse (24) in eine Formeinheit (70) einspritzt,
eine Antriebseinheit (40), die das Einspritzbauteil in dem Zylinder (20) betätigt;
eine Bewegungseinheit (50), die es der Düse (24) ermöglicht, sich auf die Formeinheit zu und von ihr weg zu bewegen,
**dadurch gekennzeichnet, dass** die Spritzgießmaschine eine Steuerung (60) umfasst, welche die Antriebseinheit (40) und die Bewegungseinheit (50) steuert,
wobei die Steuerung (60) so mit der Bewegungseinheit (50) verbunden ist, dass es der Bewegungseinheit (50) ermöglicht wird, einen ersten Druckminderungsprozess durchzuführen, bei dem ein Heißkanal durch das Zurückziehen der Düse (24) von der Formeinheit (70) im Druck reduziert wird, und so mit der Antriebseinheit (40) verbunden ist, dass es der Antriebseinheit (40) ermöglicht wird, einen zweiten Prozess zur Druckminderung durchzuführen, bei dem der Heißkanal durch die Betätigung des Einspritzbauteils im Druck reduziert wird, und zwar auf solche Weise, dass wenigstens ein Teil des ersten Druckminderungsprozesses und wenigstens ein Teil des zweiten Druckminderungsprozesses zur gleichen Zeit nach dem Abdichten des Anschnitts der Formeinheit (70) durchgeführt werden.

2. Die Spritzgießmaschine (10) nach Anspruch 1, worin das Einspritzbauteil eine Schnecke ist, die so angeordnet ist, dass sie in dem Zylinder (20) drehbar und vor- und zurückbewegbar ist, und worin das Betätigen der Schnecke bei dem zweiten Druckminderungsprozess wenigstens das Zurückbewegen oder das Drehen der Schnecke beinhaltet.

3. Die Spritzgießmaschine (10) nach Anspruch 1, worin das Einspritzbauteil ein Kolben ist, der so angeordnet ist, dass er in dem Zylinder (20) vor- und zurück bewegbar ist, und worin das Betätigen des Kolbens bei dem zweiten Druckminderungsprozess ein Zurückbewegen des Kolbens ist.

4. Die Spritzgießmaschine (10) nach einem der Ansprüche 1 bis 3, worin der erste Druckminderungsprozess durchgeführt wird, während der zweite Druckminderungsprozess durchgeführt wird.

## Revendications

1. Machine de moulage par injection (10) comprenant :
un cylindre (20) qui chauffe un matériau de moulage ;
une buse (24) qui est disposée au niveau d'une extrémité avant du cylindre (20) ;
un élément d'injection qui injecte le matériau de moulage dans le cylindre (20), de la buse (24) vers une unité de moule (70) ;
une unité d'entraînement (40) qui actionne l'élément d'injection dans le cylindre (20) ;
une unité de déplacement (50) qui permet à la buse (24) d'avancer et de se rétracter vers l'unité de moule ; **caractérisée en ce que** la machine de moulage par injection comprend :
un organe de commande (60) qui commande l'unité d'entraînement (40) et l'unité de déplacement (50) ;
dans laquelle l'organe de commande (60) est raccordé à l'unité de déplacement (50) pour permettre à l'unité de déplacement (50) de réaliser un premier processus de réduction de pression dans lequel un canal de coulée chaud est réduit en pression par la rétraction de la buse (24) vers l'unité de moule (70) et est raccordé à l'unité d'entraînement (40) pour permettre à l'unité d'entraînement (40) de réaliser un second processus de réduction de pression dans lequel le canal de coulée chaud est réduit en pression par le fonctionnement de l'élément d'injection, de sorte qu'au moins une partie du premier processus de réduction de pression et au moins une partie du second processus de réduction de pression sont réalisées en même temps, après le scellement de l'attaque de coulée de l'unité de moule (70).

2. Machine de moulage par injection (10) selon la revendication 1,
dans laquelle l'élément d'injection est une vis qui est agencée pour pouvoir tourner et pouvoir avancer et se rétracter dans le cylindre (20), et
dans laquelle le fonctionnement de la vis dans le second processus de réduction de pression comprend au moins l'une parmi la rétraction de la vis et la rotation de la vis.

3. Machine de moulage par injection (10) selon la revendication 1, dans laquelle l'élément d'injection est un piston plongeur qui est agencé pour pouvoir avancer et se rétracter dans le cylindre (20), et
dans laquelle le fonctionnement du piston plongeur dans le second processus de réduction de pression est la rétraction du piston plongeur.

4. Machine de moulage par injection (10) selon l'une quelconque des revendications 1 à 3,
dans laquelle le premier processus de réduction de pression est réalisé alors que le second processus de réduction de pression est réalisé.
